# EUROPEAN PATENT APPLICATION

(11) **EP 3 339 220 A2**
(43) Date of publication of application: **27.06.2018**
(21) Application number: 17206532.8
(22) Date of filing: 11.12.2017
(51) Int. Cl.: B65G 47/32, B65B 61/28, B65B 35/24, B65G 47/28

(54) **PACKAGE POSITIONING DEVICE, SYSTEM AND METHOD FOR PROVIDING EVEN DISTANCES BETWEEN PACKAGES**

(30) Priority: 21.12.2016 EP 16205932
(71) Applicant: Tetra Laval Holdings & Finance S.A., 1009 Pully (CH)
(72) Inventor: SJÖGREN, Magnus, SE-24040 Tjörnarp (SE); HANQUIST, Max, 27191 Ystaf (SE)
(74) Representative: Tetra Pak - Patent Attorneys SE

(57) **Abstract**

A package positioning device (120) for providing even distances between adjacent packages (1) of a flow of packages is provided. The package positioning device comprises a belt (122) being configured to be set to a belt speed, wherein the belt (122) comprises a plurality of engagement members (124) on an outer surface of the belt (122) and which are facing the packages (1) for engaging with the packages (1) such that the distance between two adjacent packages (1) from the flow of packages are maintained.

## Description

### Technical Field

The present invention relates to a package positioning device for providing even distances between adjacent packages of a flow of packages, a filling machine having such package positioning device, as well as a corresponding method for providing even distances between adjacent packages.

### Background

Irregular tetrahedral packages have been suggested by the present applicant e.g. in WO2014/154623. In short, the irregular tetrahedral packages are produced from a tube of packaging material, preferably being configured to enclose a liquid food product. The tube is formed by reforming a flat web of packaging material to a cylindrical tube, filling the tube with a product, and transversally sealing and cutting the tube, at regular intervals, into separate packages.

For this type of packages, and as is described in the above-mentioned prior art reference, the transversal seals are provided by two separate pairs of sealing jaws. These pairs of sealing jaws are operating perpendicularly relative to each other such that each pair will clamp the tube in a respective plane during sealing. The sealing jaws of a common plane may thus operate, i.e. perform sealing, in a plane being perpendicular to the longitudinal axis of the tube. As the tube normally extends vertically, the sealing plane is thus coinciding with a horizontal plane. These pairs of jaws can also betilted slightly such that the transversal seals are provided at an angle relative the horizontal plane. The purpose of having the sealing jaw pairs angled relative the horizontal plane is to produce two types of irregular tetrahedral packages in an alternating manner, where one package is a mirror image of its immediately upstream and downstream package. By combining six packages, three of each type, it has been proven possible to arrange all six packages in the shape of a rectangular box, i.e. a six-face shape of which all faces are a rectangle, and of which each pair of adjacent faces meets at a right angle.

As is evident, these types of packages may be stored and transported extremely efficient as the packages fill almost the entire space within the rectangular box.

However, the systems used for manufacturing such tetrahedral packages are still in need for improvements. When the packages leave the filling machine, the package flow is preferably uniform and there is a constant distance between adjacent packages. However, when the packages get in contact with any other object/arrangement in the downstream packaging system, the packages may get disrupted and the uniform distance between the packages may vary. In some cases this even may cause package jam and wrongly oriented packages which may disturb downstream handling of the packages.

Today, this problem is solved by arranging conveyor systems to handle the uneven package flow or by spraying parts of the packaging system with water to decrease the friction. However, neither one of these solutions are satisfactory and there is thus a need for an improved way to obtain a uniform and constant distance between the packages throughout the process.

### Summary

An object of the present invention is to provide a device for providing even distances between adjacent packages of a flow of packages downstream a package manufacturing process. This is achieved by a package positioning device comprising a belt having a plurality of engagement members.

According to a first aspect a package positioning device for providing even distances between adjacent packages of a plurality of packages is provided. The device comprises a a belt being configured to be set to a belt speed, wherein the belt comprises a plurality of engagement members on an outer surface of the belt and which are facing the packages for engaging with the packages such that the distance between two adjacent packages from the flow of packages are maintained.

In an example, the engagement members are brushes. The relative positioning of the packages may thus be performed in a gentle way using soft brushes and thus reducing the risk of damaging the packages.

The engagement members may be spaced apart such that at least an upper part of the package facing the belt is received between two following engagement members.

In an example the belt is arranged to follow at least a first and a second path in different planes.

The package positioning device may further comprise a conveyor, wherein the first path is parallel to said conveyor.

The conveyor may be configured to transport the packages at a predetermined conveyor speed.

The speed of the belt may preferably be adjustable independently of the predetermined speed of the conveyor.

The belt may be arranged vertically above said conveyor.

In an example, the second path is configured to receive the packages.

The engagement members may be evenly distributed along the entire belt.

The packages may be transported on at least one conveyor belt having a specific conveying speed.

The belt speed of the belt may be adjustable independently of the conveying speed of the at least one conveyor belt.

In one example the speed of the belt is equal to the speed of the conveyor belt. In another example the speed of the belt is set higher or lower than the speed of the conveyor.

In an example the package positioning device may be arranged in a filling machine system. The system may comprise a filling machine for producing and filling individual packages with a content, and at least one conveyor comprising a first end portion and a second end portion, wherein the first end portion receives a plurality of packages from the filling machine, wherein the package positioning device is arranged such that it maintains the distance between adjacent packages being transported on the conveyor to a predetermined distance.

According to a second aspect, a filing machine is provided. The filling machine comprises a package positioning device according to the first aspect.

The filling machine may further comprise at least one conveyor comprising a first end portion and a second end portion, wherein the first end portion receives a flow of packages from the filling machine, wherein the package positioning device is arranged such that it maintains the distance between adjacent packages being transported on the conveyor.

According to a third aspect, a method for providing even distances between adjacent packages of a flow of packages is provided. The method comprises providing a plurality of packages to at least one conveyor, and maintaining the distance between adjacent packages being transported on the conveyor to a predetermined distance by means of a package positioning device according to the first aspect.

The packages may be provided to the conveyor from a filling machine.

### Brief Description of the Drawings

Examples of the teachings herein will be described in further detail in the following with reference to the accompanying drawings which illustrate nonlimiting examples on how the examples can be reduced into practice and in which:
Fig. 1 is an isometric view of two irregular tetrahedral packages according to an example;
Fig. 2 is a schematic representation of a filling machine according to an example;
Fig. 3 is a schematic view of parts of a filling machine according to an example;
Fig. 4 is a schematic view of a package positioning device according to an example; and
Fig. 5 is a schematic view of a method according to an example.

### Detailed Description

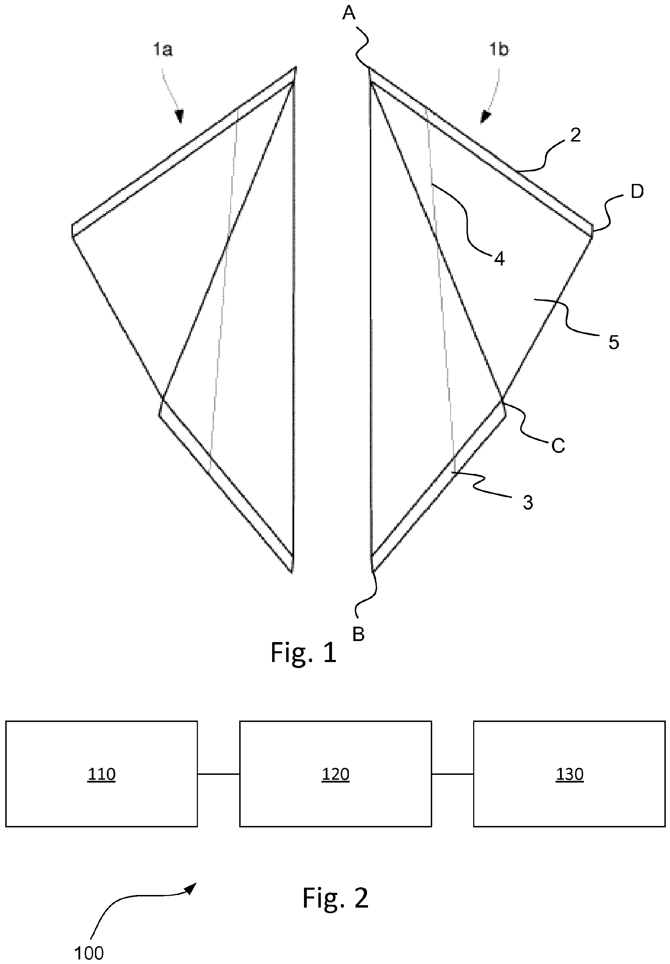

The present invention relates to a new and improved method for handling tetrahedral packages. Packages 1a-b for liquid food are shown schematically in Fig. 1. These are idealized packages having flat side panels and distinct edges, but it should be understood that an actual package may deviate slightly from this ideal shape when manufactured in an actual machine. The side panels may be bulging outwardly slightly, and the edges may be slightly rounded.

In Fig. 1, the shown packages 1a-b are made from a flat web of laminated packaging material, typically comprising a carton-based core, for giving certain stiffness to the package, and inner and outer polymer layers. The inner polymer layer makes the package liquid-tight and protects the carton-based core layer, and it further allows heat-sealing of the package into its final shape. The outer layer protects the carton-based core layer from the moisture coming from the environment.

In some cases, an aluminum layer can also be provided in the laminated packaging material, normally on the inside of the carton-based core layer, to protect the food product from oxygen and/or light. The aluminum layer is typically covered with an inner most polymer layer.

Each package 1a-b has four corners A, B, C and D that define the inner space of the package 1a-b, in which the content of the package 1 will be enclosed. Each package 1a-b has four lateral edges, being labeled using the corners, i.e. ab, ac, bd, cd, and two end edges, ad and bc. Two end fins, 2 and 3, project from said end edges. These end fins 2, 3 form transversal ends of the package 1. Each package 1a-b has four side panels, labeled by the corners that define them, i.e. ABC, ACD, ABD and BCD.

Each package 1a-b is shaped like an irregular tetrahedron. Each lateral panel ABC, ACD, ABD and BCD is a right-angle triangle (indicated at corners A and B in Fig. 1). Furthermore, two of the panels, ABC and ABD, are right-angled isosceles triangles having the same size, and having one edge ab in common. The other two panels, ACD and BCD, also have the same size and they share the hypotenuse, cd.

Each package 1a-b is shown to have a longitudinal sealing 4 extending from the first transversal end 2 to the second transversal end 3. The longitudinal sealing 4 is made during the forming of a flat web of packaging material into a tube, before the package is filled with product and is divided into individual packages, in a way that is common in form-fill-seal machines, or in aseptic filling machines of the kind manufactured by the applicant, such as Tetra Pak® A3/Flex or Tetra Pak® A1.

Each package 1a-b thus has a body 5 having a tetrahedral shape formed by transversally sealing two ends 2, 3, of a tube of packaging material.

The packages 1, being defined as above, are preferably continuously formed as two different types in an alternating manner, one type being the mirror image of the second type. In Fig. 1, a first package 1a is shown to the left, and a second package 1b is shown to the right, having a mirrored shape to the first package 1a. It is possible to combine three packages, two first packages 1a and one second package 1b, into a triangular prism. Two such triangular prisms can be combined into a rectangular box. The rectangular box can be formed in two ways: 1) by combining two groups of 1a-1b-1a prisms, or 2) by combining a group of 1a-1b-1a prism with a group of 1b-1a-1b prism. In the second case, the same amount of first type 1a and second type 1b packages are used.

The new system for manufacturing tetrahedral packages as described above will be described with reference to Figs. 2 - 4. Fig. 2 is a schematic view showing a filling machine system 100 comprising a filling machine 110 for creating and filling a package with a product such as liquid food, a package positioning device 120 to provide even distances between a plurality of packages 1 in the system 100 and at least one conveyor 130 for transporting the packages into further distribution systems (not shown).

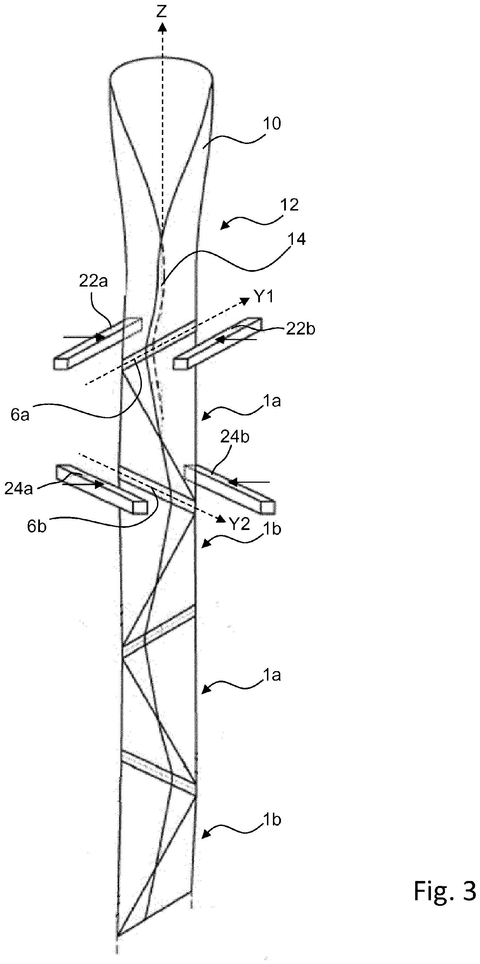

In Fig. 3, showing parts of a filling machine 110, a part of a web 10 of packaging material is provided, being of the laminated type as described above. The flat web 10 of packaging material is brought through a forming section, not shown, in which the web 10 is formed into a cylindrical tube 12 of packaging material. An overlap area 14, forming a longitudinal seal, is provided during the tube forming. The overlapping edges are sealed together in a way known per se, typically by heating the edges and then pressing them together. The overlap area 14 may be provided with a plastic strip, not shown, which is sealed to the inside surface of the overlap area 14, and which strip protrudes from one lateral edge of the web 10 of packaging material. This strip serves to cover the inner carton edge of the packaging material, in a way known per se, which edge may otherwise absorb the liquid food product inside the package 1a, 1b.

In Fig. 3, the arrangement shown provides first packages 1a and second packages 1b in an alternating manner from a single tube 12 of packaging material. For this, a sealing jaw arrangement 20 is required. The sealing jaw arrangement 20 comprises at least a first pair of opposing sealing jaws 22a, 22b being movable relative to each other to provide a first transversal seal 6a to the tube 12, and a second pair of opposing sealing jaws 24a, 24b being moveable relative to each other to provide a second transversal seal 6b to the tube 12. The first transversal seal 6a is provided such that it forms the upper transversal end 2 of one package 1b, and a bottom transversal end 3 of its adjacent package 1a (see Fig. 1), while the second transversal seal 6b is provided such that it forms the bottom transversal end 2 of one package 1a, and an upper transversal end 2 of its adjacent package 1b.

The pairs of sealing jaws 22a-b, 24a-b are mounted for reciprocal motion toward and away from one another, as is indicated with arrows on each jaw 22a-b, 24a-b. The jaws of a pair when moved toward each other act to compress and flatten the tube 12 of packaging material so as to adhere opposed interior surfaces of the packaging material together to achieve a seal of the tubular material along a seam line or sealing axis which intersects the longitudinal axis Z of the tube 12.

In order to achieve the unique irregularity of the tetrahedral shape of the packages 1a, 1b, each pair of jaws 22a-b, 24a-b is also so oriented when moving to and away from each other as to lie in a plane which has a predetermined angular relationship to the length direction of the tube 12 of packaging material so that the longitudinal axis Y1, Y2 of the transversal sealings 6a, 6b achieved by each pair of jaws has the same predetermined angular relationship to the longitudinal axis Z of the tube of packaging material. Each sealing jaw 22a-b, 24a-b is for this purpose, when arranged in their respective operative position for providing the sealing 6a, 6b, angled approximately 22.5° relative a plane being perpendicular to the longitudinal axis Z of the tube 12. This will lead to transversal sealings 6a, 6b that will have a longitudinal axis Y1, Y2 that is angled approximately 22.5° in relation to a plane that is orthogonal to the longitudinal axis Z of the tube 12 of packaging material.

The pairs of jaws 22a-b, 24a-b may be spaced apart longitudinally from another, measured along the longitudinal axis Z of the tube 12 of packaging material, as indicated in Fig. 2. However, the first and second pair of sealing jaws 22a-b, 24a-b may also be arranged in a common plane, whereby activation of the respective pair is controlled in a manner such that when the tube 12 is fed forward (or downward in Fig. 3), the sealings 6a, 6b will be provided at regular intervals.

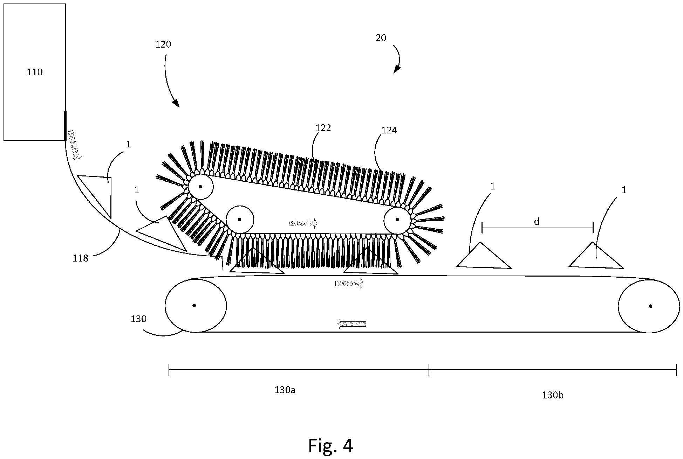

When the packages 1a-b are sealed and tetrahedral packages are provided, the packages 1a-b are transported out from the filling machine 110 by a device such as a drop chute 118 (shown in Fig. 4).

When the packages 1a-b are inside the filling machine 110, the package flow is uniform and there is a predetermined distance between the packages 1a-b. However, a problem in prior art system is that as soon as the packages 1a-b leave the filling machine 110, the distance between the packages 1a-b may be interrupted by connected machines or devices.

This problem is solved by arranging a package positioning device 120 in close conjunction to the filling machine 110 and at least the drop chute 118, illustrated in Fig. 4. Hence, the package positioning device 120 will assist in maintaining the original distance between adjacent packages, thus eliminating potential problems of package jam, etc.

In an example, illustrated in Fig. 4, the package positioning device 120 is arranged such that it receives the packages at the drop chute 118 in order to maintain their pre-determined distance when being ejected from the filing machine 110.

In an example, the at least one conveyor 130, here in the form of an endless belt, comprises a first end portion 130a and a second end portion 130b, where the first end portion 130a is arranged in close proximity to the package positioning device 120. The first end portion 130a of the conveyor is arranged to receive the plurality of packages 1 originating from the filling machine 110. The packages 1 are transported on the first end portion 130a, while being affected by the package positioning device 120, towards the second end portion 130b of the conveyor 130. The conveyor 130 may transport the packages 1 into a downstream distribution system where the packages 1 are packed into secondary packages suitable for transportation and storage (not shown).

The conveyor 130 is set to a conveying speed Vc. Preferably, the conveyor speed is adjustable.

In an example the package positioning device 120 is arranged in close conjunction to a first end portion 130a of the at least one conveyor belt 130. Hence, the package 1 is transported from the filling machine 110, through the drop chute 118 and onto the first end portion 130a of the conveyor belt 130 as illustrated in Fig. 4. The package positioning device 120 is arranged such that it adjusts or maintains the distance between the adjacent packages 1 when leaving the filling machine 110 via the drop chute 118, and being transported on the first end portion 130a of the conveyor 130, preferably at a predetermined distance d. At the latest, the packages 1 will be arranged with a predetermined distance d between each other once the packages reach the second end portion 130b of the conveyor 130.

In another example the first end portion 130a and the second end portion 130b are two separate conveyor belts arranged next to each other, end-by-end. Hence, the package positioning device 120 is arranged in close conjunction to the first conveyor belt and the packages are transported from the filling machine 110, through the drop chute 118 and onto the first conveyor belt. While being transported on the first conveyor belt, the package positioning device 120 adjusts the position of the packages so that the distance between the packages is preferably a predetermined distance d, before the packages 1 reaches the second conveyor belt.

In the example shown in Fig. 4, the package positioning device 120 is arranged slightly above the conveyor belt 130. However, it should be noted that the package positioning device 120 could be arranged in other ways as long as it is arranged in close proximity to the conveyor belt 130 and such that the package positioning device engages with the packages 1. In an example two package positioning devices are arranged on each side of the conveyor belt (not shown).

In one example, the predetermined distance d is the same distance that the packages exit from the filling machine 100. However, the predetermined distance d may be set to any convenient distance.

The package positioning device 120 comprises a belt 122. The belt 122 is arranged with a plurality of engagement members 124 that gently adjust the position of the packages. The plurality of engagement members 124 are arranged on an outer surface of the belt facing the packages 1 formthe drop chute 118 and being transported on the conveyor belt 130. Preferably, the plurality of engagement members 124 is constructed by a flexible and soft material so as not to damage the packages.

In the example shown in Fig. 4, the belt is a belt brush 122 and the plurality of engagement members 124 are provided in the form of brushes distributed evenly along the entire length of the belt 122. The belt 122 may be seen as comprising a plurality of small brushes 124 or by comprising one larger brush-system. The belt 122 is preferably configured as an endless belt.

The brush surface is arranged to adapt to different shapes arranged in conjunction to the belt brush, such as packages 1 of an irregular shape. The hardness of the brush may be adapted depending on the fragility of the package 1 which it is intended for, where a package 1 is prone to break a soft brush is preferably used whereas harder brushes may be used for bigger and less fragile packages 1. Depending on the desirable hardness of the brush different materials may be used. The brush may for example comprise natural hairs or bristles, plant fibres or synthetic bristles. In one example the brush comprises polyester elastomers that are resistant to moisture, oil, grease and to numerous chemicals.

The belt 122 is arranged to move at a predetermined speed Vb. Preferably, the belt 122 has a belt speed Vb suitable for arranging packages 1at a predetermined distance d from each other.

In one example, the belt speed Vd is adjustable independently of a conveying speed Vc of the conveyor belt 130 in the packing system 20. Depending on the conditions in the packaging system 20, the belt speed Vb of the belt 122 may be either equal to, higher, or lower than the conveying speed Vc of the conveyor belt 130.

In Fig. 4 the forward direction of travel of the belt 122 is indicated by an arrow. In the example shown, the direction of travel of the belt 122 is the same as the direction of travel of the packages and thus the same as the forward direction of travel of the conveyor belt 130. However, it should be noted that the direction of travel of the belt 122 may be opposite to the travel direction of the conveyor belt 130.

As is shown in Fig. 4 the belt 122 is arranged to follow at least a first and a second path in different planes. The second path corresponds to the part of the belt 122 being substantially parallel to the conveyor 130, while the first path corresponds to the part of the belt 122 being arranged to receive the packages 1. The angle between the first and second paths may e.g. be realized by one or more guiding rollers, urging the belt 122 to accommodate to different paths.

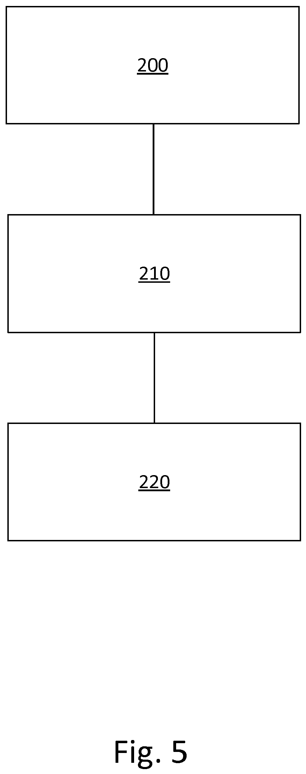

Fig. 5 shows a method for providing even distances between a flow of packages 1 in a filling machine system 100. Firstly, a plurality of packages 1 is provided, in a step 200, from a filling machine 110. The packages are transported in a step 210, from the filling machine 110 to the conveyor belt 130. The package positioning device 120 adjusts, in a step 220, the distance between the individual packages 1, being transported on the conveyor belt, to a predetermined distance d.

## Claims

1. A package positioning device for providing even distances between adjacent packages of a flow of packages from a jaw system comprising,
a belt being configured to be set to a belt speed, wherein the belt comprises a plurality of engagement members on an outer surface of the belt and which are facing the packages for engaging with the packages such that the distance between two adjacent packages from the flow of packages are maintained.

2. The package positioning device according to claim 1, wherein the engagement members are brushes.

3. The package positioning device according to claim 1 or 2, wherein the engagement members are spaced apart such that at least an upper part of the package facing the belt is received between two following engagement members.

4. The package positioning device according to any one of the preceding claims, wherein the belt is arranged to follow at least a first and a second path in different planes.

5. The package positioning device according to claim 4, further comprising a conveyor, wherein the first path is parallel to said conveyor.

6. The package positioning device according to claim 5, wherein said conveyor is configured to transport the packages at a predetermined conveyor speed.

7. The package positioning device according to claim 6, wherein the speed of the belt is the same as the speed of the conveyor.

8. The package positioning device according to any one of claims 5-7, wherein said belt is arranged vertically above said conveyor.

9. The package positioning device according to any one of claims 4-8, wherein the second path is configured to receive the packages.

10. The package positioning device according to any one of the preceding claims, wherein the engagement members are evenly distributed along the entire belt.

11. The package positioning device according to any one of claims 5-9,
wherein the speed of the belt is higher or lower than the speed of the conveyor.

12. A filing machine comprising,
a package positioning device according to any one of claims 1-11.

13. A filling machine according to claim 12 further comprising,
at least one conveyor comprising a first end portion and a second end portion, wherein the first end portion receives a flow of packages from the filling machine,
wherein the package positioning device is arranged such that it assists in maintaining the original distance between adjacent packages being transported on the conveyor.

14. Method for providing even distances between adjacent packages of a plurality of packages comprising the steps of:
providing a flow of packages to at least one conveyor; and
maintaining the distance between adjacent packages being transported on the conveyor by means of a package positioning device according to any one of claims 1-11.

15. The method according to claim 14, wherein the packages are provided to the conveyor from a filling machine.
